# EUROPEAN PATENT APPLICATION

(11) **EP 4 503 801 A1**
(43) Date of publication of application: **05.02.2025**
(21) Application number: 23777956.6
(22) Date of filing: 22.03.2023
(51) Int. Cl.: H04W 72/04, H04W 28/22

(54) **RATE MATCHING METHOD AND RATE MATCHING APPARATUS**

(30) Priority: 30.03.2022 CN 202210325018
(71) Applicant: Beijing Unisoc Communications Technology Co., Ltd, Beijing 100083 (CN)
(72) Inventor: WANG, Hualei, Beijing 100083 (CN)
(74) Representative: Mewburn Ellis LLP
(86) International application number: PCT/CN2023/083092
(87) International publication number: WO 2023/185585

(57) **Abstract**

Disclosed are a rate matching method and rate matching apparatus. The method includes receiving first configuration information and/or second configuration information and/or third configuration information. The first configuration information is used to configure a first rate matching pattern list for a unicast channel; and the first rate matching pattern list further applies for or does not apply for a broadcast channel, and/or further applies for or does not apply for a multicast channel. The second configuration information is used to configure a second rate matching pattern list for a broadcast channel; and the second rate matching pattern list further applies for or does not apply for a unicast channel, and/or further applies for or does not apply for a multicast channel. The third configuration information is used to configure a third rate matching pattern list for a multicast channel, and/or rate matching pattern group 1 for a multicast channel, and/or rate matching pattern group 2 for a multicast channel; and the third rate matching pattern list, and/or the rate matching pattern group 1, and/or the rate matching pattern group 2 further applies for or does not apply for a broadcast channel, and/or further applies for or does not apply for a unicast channel. The method is beneficial for improving system performance.

## Description

### TECHNICAL FIELD

This disclosure relates to the field of communication technologies, and in particular, to a rate matching method and a rate matching apparatus.

### BACKGROUND

The 3GPP R17 definitely supports multicast broadcast services (MBS), supports broadcast MBS and multicast MBS, and supports rate matching of broadcast MBS. However, how to determine a rate matching pattern for MBS to improve the system performance is a problem to be solved urgently at present.

### SUMMARY

The present disclosure provides a rate matching method and a rate matching apparatus, which are beneficial to improving the system performance.

In a first aspect, a rate matching method is provided in the present disclosure. The method includes the following. Receive first configuration information and/or second configuration information and/or third configuration information. The first configuration information is used to configure a first rate matching pattern list *(rateMatchPatternToAddModList)* for a unicast channel; and the first rate matching pattern list further applies for a broadcast channel or does not apply for a broadcast channel, and/or the first rate matching pattern list further applies for a multicast channel or does not apply for a multicast channel. The second configuration information is used to configure a second rate matching pattern list for a broadcast channel; and the second rate matching pattern list further applies for a unicast channel or does not apply for a unicast channel, and/or the second rate matching pattern list further applies for a multicast channel or does not apply for a multicast channel. The third configuration information is used to configure a third rate matching pattern list for a multicast channel, and/or rate matching pattern group 1 (*rateMatchPatternGroup1*) for a multicast channel, and/or rate matching pattern group 2 *(rateMatchPatternGroup2)* for a multicast channel; and the third rate matching pattern list, and/or the rate matching pattern group 1, and/or the rate matching pattern group 2 further applies for a broadcast channel or does not apply for a broadcast channel, and/or the third rate matching pattern list, and/or the rate matching pattern group 1, and/or the rate matching pattern group 2 further applies for a unicast channel or does not apply for a unicast channel.

Based on the method described in the first aspect, it is beneficial to improving the system performance, such as improving system robustness or improving system throughput. For example, when the first rate matching pattern list further applies for a broadcast channel or a multicast channel, the second rate matching pattern list further applies for a unicast channel or a multicast channel, or the third rate matching pattern list, and/or the rate matching pattern group 1, and/or the rate matching pattern group 2 further applies for a broadcast channel or a unicast channel, the robustness of the system can be improved. When the first rate matching pattern list does not apply for a broadcast channel or a multicast channel, the second rate matching pattern list does not apply for a unicast channel or a multicast channel, or the third rate matching pattern list, and/or the rate matching pattern group 1, and/or the rate matching pattern group 2 does not apply for a broadcast channel or a unicast channel, the system throughput can be improved.

In a possible embodiment, up to 4 rate matching patterns are configured per bandwidth part (BWP), and up to 4 rate matching patterns are configured per serving cell. In this possible embodiment, by restricting the number of rate matching patterns per BWP and per service cell, the complexity of a terminal can be reduced.

In a possible embodiment, the first configuration information is a physical downlink shared channel configuration *(PDSCH-Config)* or a serving cell configuration *(ServingCellConfig)* or a serving cell common configuration *(ServingCellConfigCommon);* and/or the second configuration information is a physical downlink shared channel-configuration-broadcast multicast service control channel *(PDSCH-Config-MCCH)* or a physical downlink shared channel-configuration-broadcast multicasti service traffic channel *(PDSCH-Config-MTCH*); and/or the third configuration information is physical downlink shared channel configuration-multicast *(PDSCH-Config-Multicast).*

In a possible embodiment, the unicast channel is a unicast physical downlink shared channel (PDSCH), and/or the broadcast channel is a broadcast PDSCH, and/or the multicast channel is a multicast PDSCH.

In a possible embodiment, the unicast PDSCH is a PDSCH scheduled or activated by a first physical downlink control channel (PDCCH), and the first PDCCH is scrambled by a cell-radio network temporary identifier (C-RNTI), a modulation and coding scheme-cell-radio network temporary identifier (MCS-C-RNTI), or a configured scheduling-radio network temporary identifier (CS-RNTI); and/or the broadcast PDSCH is a PDSCH scheduled by a second PDCCH, and the second PDCCH is scrambled by a broadcast multicast service control channel-radio network temporary identifier (MCCH-RNTI) or a group-radio network temporary identifier (G-RNTI) for broadcast; and/or the multicast PDSCH is a PDSCH scheduled by a third PDCCH, and the third PDCCH is scrambled by a group configured scheduling-radio network temporary identifier (G-CS-RNTI) or a G-RNTI for multicast.

In a second aspect, a rate matching method is provided in the present disclosure. The method includes the following. Send first configuration information and/or second configuration information and/or third configuration information. The first configuration information is used to configure a first rate matching pattern list (*rateMatchPatternToAddModList*) for a unicast channel; and the first rate matching pattern list further applies for a broadcast channel or does not apply for a broadcast channel, and/or the first rate matching pattern list further applies for a multicast channel or does not apply for a multicast channel. The second configuration information is used to configure a second rate matching pattern list for a broadcast channel; and the second rate matching pattern list further applies for a unicast channel or does not apply for a unicast channel, and/or the second rate matching pattern list further applies for a multicast channel or does not apply for a multicast channel. The third configuration information is used to configure a third rate matching pattern list for a multicast channel, and/or rate matching pattern group 1 (*rateMatchPatternGroup1*) for a multicast channel, and/or rate matching pattern group 2 *(rateMatchPatternGroup2)* for a multicast channel; and the third rate matching pattern list, and/or the rate matching pattern group 1, and/or the rate matching pattern group 2 further applies for a broadcast channel or does not apply for a broadcast channel, and/or the third rate matching pattern list, and/or the rate matching pattern group 1, and/or the rate matching pattern group 2 further applies for a unicast channel or does not apply for a unicast channel.

Based on the method described in the second aspect, it is beneficial to improving the system performance, such as improving system robustness or improving system throughput.

In a possible embodiment, up to 4 rate matching patterns are configured per bandwidth part (BWP), and up to 4 rate matching patterns are configured per serving cell. In this possible embodiment, by restricting the number of rate matching patterns per BWP and per service cell, the complexity of a terminal can be reduced.

In a possible embodiment, the first configuration information is a physical downlink shared channel configuration *(PDSCH-Config)* or a serving cell configuration *(ServingCellConfig)* or a serving cell common configuration *(ServingCellConfigCommon);* and/or the second configuration information is a physical downlink shared channel-configuration-broadcast multicast service control channel (*PDSCH-Config-MCCH*) or a physical downlink shared channel-configuration-broadcast multicast service traffic channel *(PDSCH-Config-MTCH*); and/or the third configuration information is physical downlink shared channel configuration-multicast *(PDSCH-Config-Multicast).*

In a possible embodiment, the unicast channel is a unicast physical downlink shared channel (PDSCH), and/or the broadcast channel is a broadcast PDSCH, and/or the multicast channel is a multicast PDSCH.

In a possible embodiment, the unicast PDSCH is a PDSCH scheduled or activated by a first physical downlink control channel (PDCCH), and the first PDCCH is scrambled by a cell-radio network temporary identifier (C-RNTI), a modulation and coding scheme-cell-radio network temporary identifier (MCS-C-RNTI), or a configured scheduling-radio network temporary identifier (CS-RNTI); and/or the broadcast PDSCH is a PDSCH scheduled by a second PDCCH, and the second PDCCH is scrambled by a broadcast multicast service control channel-radio network temporary identifier (MCCH-RNTI) or a group-radio network temporary identifier (G-RNTI) for broadcast; and/or the multicast PDSCH is a PDSCH scheduled by a third PDCCH, and the third PDCCH is scrambled by a group configured scheduling-radio network temporary identifier (G-CS-RNTI) or a G-RNTI for multicast.

In a third aspect, a rate matching apparatus is provided in the present disclosure. The rate matching apparatus includes a unit configured to perform the method in the first aspect or the second aspect.

In a fourth aspect, a chip is provided in the present disclosure. The chip includes a processor and a communication interface, and the processor is configured to enable the chip to perform the method in the first aspect or the second aspect.

In a fifth aspect, a module device is provided in the present disclosure. The module device includes a communication module, a power module, a storage module, and a chip. The power module is configured to power the module device. The storage module is configured to store data and instructions. The communication module is configured to perform communication within the module device, or configured to perform communication between the module device and an external device. The chip is configured to perform the method in the first aspect or the second aspect.

In a sixth aspect, a rate matching apparatus is provided in the present disclosure. The rate matching apparatus includes a memory and a processor, the memory is configured to store a computer program, the computer program includes program instructions, and the processor is configured to invoke the program instructions to enable the rate matching apparatus to perform the method in the first aspect or the second aspect.

In a seventh aspect, a computer-readable storage medium is provided in the present disclosure, where the computer storage medium stores computer-readable instructions which, when executed on a rate matching apparatus, enable the rate matching apparatus to perform the method in the first aspect or the second aspect.

In an eighth aspect, a computer program or a computer program product is provided in the present disclosure, the computer program or the computer program product includes codes or instructions which, when executed on a computer, enable the computer to perform the method in the first aspect or the second aspect.

### BRIEF DESCRIPTION OF THE DRAWINGS

In order for clarity in elaboration of technical solutions of embodiments of the disclosure, the following will give a brief introduction to the accompanying drawings used for describing embodiments. Apparently, the accompanying drawings described below are merely some embodiments of the disclosure. Based on these drawings, those of ordinary skill in the art can also obtain other drawings without creative effort.
FIG. 1 is a schematic diagram of a communication system provided in embodiments of the present disclosure.
FIG. 2 is a schematic flowchart of a rate matching method provided in embodiments of the present disclosure.
FIG. 3 is a schematic structural diagram of a rate matching apparatus provided in embodiments of the present disclosure.
FIG. 4 is a schematic structural diagram of a rate matching apparatus provided in embodiments of the present disclosure.
FIG. 5 is a schematic structural diagram of a module device provided in embodiments of the present disclosure.

### DETAILED DESCRIPTION

Specific embodiments of the present disclosure will be further described in detail below with reference to the accompanying drawings.

The terms "first", "second", and the like used in the specification, the claims, and the accompany drawings of the disclosure are used to distinguish different objects rather than describe a particular order. The terms "include", "comprise", and "have" as well as variations thereof are intended to cover non-exclusive inclusion. For example, a process, method, system, product, or apparatus including a series of steps or units is not limited to the listed steps or units, it can optionally include other operations or units that are not listed; alternatively, other operations or units inherent to the process, method, product, or device can be included either.

The term "embodiment" referred to herein means that a particular feature, structure, or feature described in conjunction with an implementation or embodiment may be contained in at least one embodiment of the disclosure. The phrase appearing in various places in the specification does not necessarily refer to the same embodiment, nor does it refer to an independent or alternative embodiment that is mutually exclusive with other embodiments. It is explicitly and implicitly understood by those skilled in the art that an embodiment described herein may be combined with other embodiments.

In embodiments of the present disclosure, "at least one (item)" refers to one or more, "a plurality of" or "multiple" refers to two or more, and "at least two (item)" refers to two or more than three (including three). "And/or" describes an association relationship between associated objects, which means that there can be three relationships. For example, A and/or B can mean A alone, B alone, and both A and B exist, where A and B each can be singular or plural. The character "j" herein generally indicates that associated objects are in an "or" relationship. "At least one (item) of the following" as well as similar expressions thereof refers to any combination of these items, including any combination of a singular one (item) or a plural one (item). For example, at least one (item) of a, b, or c can mean: a, b, c, a-b, a-c, b-c, or a-b-c, where a, b, and c each can be one or multiple.

In order to better understand embodiments of the present disclosure, the communication system involved in embodiments of the present disclosure will be first described below.

Technical solutions of embodiment of the present disclosure apply for various communication systems, such as a global system of mobile communication (GSM), a code division multiple access (CDMA) system, a wideband code division multiple access (WCDMA) system, a general packet radio service (GPRS), a long term evolution (LTE) system, and an LTE frequency division duplex (FDD) system, an LTE time division duplex (TDD) system, a universal mobile telecommunication system (UMTS), a worldwide interoperability for microwave access (WiMAX) communication system, a fifth generation (5G) system or new radio (NR), other future communication systems, etc.

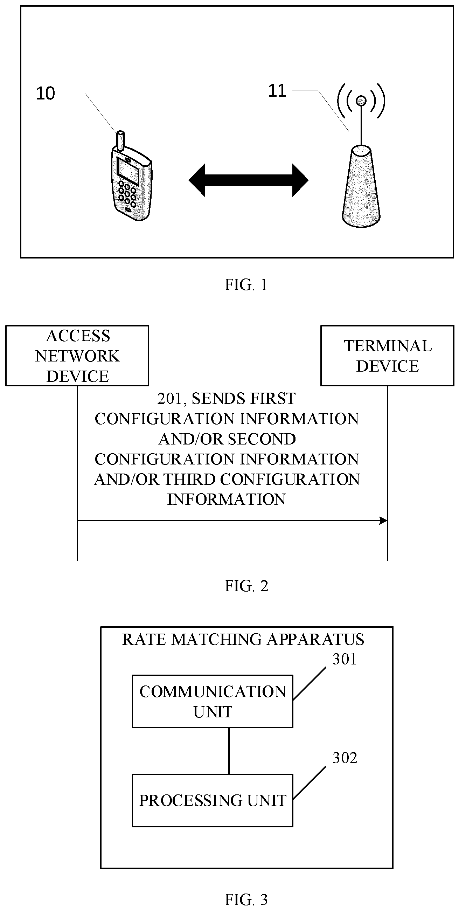

Reference is made to FIG. 1, which is a schematic diagram of a communication system provided in embodiments of the present disclosure. As illustrated in FIG. 1, the communication system includes a terminal device 10 and a network device 11. The number of terminal devices is merely illustrative, which will not be limited in embodiments of the present disclosure.

The terminal device and the access network device involved in FIG. 1 will be described in detail in the following.

### I. Terminal Device

A terminal device includes a device that provides voice and/or data connectivity to a user, e.g., a terminal device is a device with wireless transceiver functionality that can be deployed on land, which includes indoor or outdoor, handheld, wearable, or in-vehicle. The terminal device can also be deployed on water (such as ships, etc.). The terminal device can also be deployed in the air (such as airplanes, balloons, satellites, etc.). The terminal device can be a mobile phone, a pad, a computer with wireless transceiver functions, a virtual reality (VR) terminal device, an augmented reality (AR) terminal device, a wireless terminal in industrial control, in-vehicle terminal device, a wireless terminal in self-driving, a wireless terminal in remote medicine, a wireless terminal in smart grid, a wireless terminal in transportation safety, a wireless terminal in smart city, a wireless terminal in smart home, a wearable terminal device, etc. Embodiments of the present disclosure do not limit the application scenarios. The terminal device can also be referred to as a terminal, a user equipment (UE), an access terminal device, an in-vehicle terminal, an industrial control terminal, a UE unit, a UE station, a mobile station, a mobile platform, a remote station, a remote terminal device, a mobile device, a UE terminal device, a terminal device, a wireless communication device, a UE agent, a UE apparatus, etc. The terminal device can also be fixed or mobile.

### II. Access Network Device

An access network device is an entity for sending or receiving signals on a network side. The access network device includes, but is not limited to, a generation node B (gNB), an evolved node B (eNB), a next generation evolved node B (ng-eNB), a radio backhaul device, and a radio network controller (RNC), node B (NB), base station controller (BSC), base transceiver station (BTS), home evolved node B (HeNB), home node B (HNB), a baseband unit (BBU), a transmitting and receiving point (TRP), a transmitting point (TP), a mobile switching center, and an entity for sending a signal to a tag-type terminal device, such as reader, in a fifth generation mobile communication system (5G).

In order to better understand the embodiments of the present disclosure, some specialized terms involved in the present disclosure are introduced below.

### I. Rate matching pattern list (rateMatchPatternToAddModList)

The rate matching pattern list contains one or more rate matching patterns, and each rate matching pattern is used to indicate rate matching resources corresponding to a channel. Rate matching in the present disclosure can be understood as that the rate matching resources corresponding to the channel is not available for channel transmission. The rate matching in the present disclosure can also be understood as that a resource element (RE) corresponding to the rate matching pattern is not available for the channel. After the access network device configures the rate matching pattern list for the terminal device, the terminal device may directly use the rate matching pattern list to perform rate matching, and the access network device does not need to subsequently indicate, through a dynamic signaling, whether the terminal device uses the rate matching pattern list to perform rate matching.

### II. Rate matching pattern Group 1 (rateMatchPatternGroupl)

The rate matching pattern group 1 includes one or more user-specific or cell-specific or bandwidth-part (BWP)-specific rate matching patterns. After the access network device configures the rate matching pattern group 1 for the terminal device, the access network device subsequently needs to indicate, through a dynamic signaling, whether the terminal device uses the rate matching pattern group 1 to perform rate matching.

### III. Rate matching pattern Group 2 (RateMatchPatternGroup2)

The rate matching pattern group 2 includes one or more user-specific or cell-specific or BWP-specific rate matching patterns. After the access network device configures the rate matching pattern group 2 for the terminal device, the access network device subsequently needs to indicate, through a dynamic signaling, whether the terminal device uses the rate matching pattern group 2 to perform rate matching.

In order to reasonably perform rate matching, the present disclosure provides a rate matching method and apparatus, a chip, and a module device. The rate matching method and apparatus, the chip, and the module device provided in embodiments of the present disclosure will be further described in detail below.

FIG. 2 is a schematic flowchart of a rate matching method provided in embodiments of the present disclosure. As illustrated in FIG. 2, the rate matching method includes the following operation at 201. The method illustrated in FIG. 2 may be executed by a terminal device and an access network device, or the method illustrated in FIG. 2 may be executed by a chip in the terminal device and a chip in the access network device.

At 201, the access network device sends first configuration information and/or second configuration information and/or third configuration information. Correspondingly, the terminal device may receive the first configuration information and/or the second configuration information and/or the third configuration information.

In other words, there are totally 7 following cases. 1. The access network device sends the first configuration information, and the terminal device receives the first configuration information. 2. The access network device sends the second configuration information, and the terminal device receives the second configuration information. 3. The access network device sends the third configuration information, and the terminal device receives the third configuration information. 4. The access network device sends the first configuration information and the second configuration information, and the terminal device receives the first configuration information and the second configuration information. 5. The access network device sends the second configuration information and the third configuration information, and the terminal device receives the second configuration information and the third configuration information. 6. The access network device sends the first configuration information and the third configuration information, and the terminal device receives the first configuration information and the third configuration information. 7. The access network device sends the first configuration information, the second configuration information, and the third configuration information, and the terminal device receives the first configuration information, the second configuration information, and the third configuration information.

The first configuration information, the second configuration information, and the third configuration information are introduced below respectively.

### I. First Configuration Information

The first configuration information is used to configure a first rate matching pattern list *(rateMatchPatternToAddModList)* for a unicast channel. The first rate matching pattern list further applies for a broadcast channel or does not apply for the broadcast channel; and/or the first rate matching pattern list further applies for a multicast channel or does not apply for the multicast channel.

In other words, the first rate matching pattern list has the following 8 possible application modes. 1. The first rate matching pattern list applies for the unicast channel and the broadcast channel. 2. The first rate matching pattern list applies for the unicast channel and does not apply for the broadcast channel. 3. The first rate matching pattern list applies for the unicast channel and the multicast channel. 4. The first rate matching pattern list applies for the unicast channel and does not apply for the multicast channel. 5. The first rate matching pattern list applies for the unicast channel, the broadcast channel, and the multicast channel. 6. The first rate matching pattern list applies for the unicast channel and the broadcast channel, and does not apply for the multicast channel. 7. The first rate matching pattern list applies for the unicast channel, does not apply for the broadcast channel, and further applies for the multicast channel. 8. The first rate matching pattern list applies for the unicast channel, and does not apply for the broadcast channel and the multicast channel.

In a possible embodiment, the first configuration information is a physical downlink shared channel configuration *(PDSCH-Config)* or a serving cell configuration *(ServingCellConfig)* or a serving cell common configuration *(ServingCellConfigCommon).*

### II. Second Configuration Information

The second configuration information is used to configure a second rate matching pattern list for a broadcast channel. The second rate matching pattern list further applies for a unicast channel or does not apply for a unicast channel, and/or the second rate matching pattern list further applies for a multicast channel or does not apply for a multicast channel.

In other words, the second rate matching pattern list has the following 8 possible application modes. 1. The second rate matching pattern list applies for the broadcast channel and the unicast channel. 2. The second rate matching pattern list applies for the broadcast channel and does not apply for the unicast channel. 3. The second rate matching pattern list applies for the broadcast channel and the multicast channel. 4. The second rate matching pattern list applies for the broadcast channel and does not apply for the multicast channel. 5. The second rate matching pattern list applies for the broadcast channel, the unicast channel, and the multicast channel. 6. The second rate matching pattern list applies for the broadcast channel and the unicast channel, and does not apply for the multicast channel. 7. The second rate matching pattern list applies for the broadcast channel, does not apply for the unicast channel, and applies for the multicast channel. 8. The second rate matching pattern list applies for the broadcast channel, and does not apply for the unicast channel and the multicast channel.

In a possible embodiment, the second configuration information is a physical downlink shared channel-configuration-broadcast multicast service control channel *(PDSCH-Config-MCCH*) or a physical downlink shared channel-configuration-broadcast multicast service traffic channel (*PDSCH-Config-MTCH*)*.*

### III. Third Configuration Information

The third configuration information is used to configure a third rate matching pattern list for a multicast channel, and/or rate matching pattern group 1 *(rateMatchPatternGroupl)* for a multicast channel, and/or rate matching pattern group 2 *(rateMatchPatternGroup2)* for a multicast channel; and the third rate matching pattern list, and/or the rate matching pattern group 1, and/or the rate matching pattern group 2 further applies for a broadcast channel or does not apply for a broadcast channel, and/or the third rate matching pattern list, and/or the rate matching pattern group 1, and/or the rate matching pattern group 2 further applies for a unicast channel or does not apply for a unicast channel.

In other words, the third rate matching pattern list, and/or the rate matching pattern group 1, and/or the rate matching pattern group 2 has the following 8 possible application modes. 1. The third rate matching pattern list, and/or the rate matching pattern group 1, and/or the rate matching pattern group 2 applies for the multicast channel and the broadcast channel. 2. The third rate matching pattern list, and/ or the rate matching pattern group 1, and/or the rate matching pattern group 2 applies for the multicast channel, and does not apply for the broadcast channel. 3. The third rate matching pattern list, and/or the rate matching pattern group 1, and/or the rate matching pattern group 2 applies for the multicast channel and the unicast channel. 4. The third rate matching pattern list, and/or the rate matching pattern group 1, and/or the rate matching pattern group 2 applies for the multicast channels and does not apply for the unicast channel. 5. The third rate matching pattern list, and/or the rate matching pattern group 1, and/or the rate matching pattern group 2 applies for the multicast channel, the broadcast channel, and the unicast channel. 6. The third rate matching pattern list, and/or the rate matching pattern group 1, and/or the rate matching pattern group 2 applies for the multicast channel and the broadcast channel, and does not apply for the unicast channel. 7. The third rate matching pattern list, and/or the rate matching pattern group 1, and/or the rate matching pattern group 2 applies for the multicast channel, does not apply for the broadcast channel, and further applies for the unicast channel. 8. The third rate matching pattern list, and/or the rate matching pattern group 1, and/or the rate matching pattern group 2 applies for the multicast channel, and does not apply for the broadcast channel and the unicast channel.

In a possible embodiment, the third configuration information is physical downlink shared channel configuration-multicast *(PDSCH-Config-Multicast).*

It is to be noted that throughout the embodiments of the present disclosure, if a rate matching pattern list applies for a channel, it means that rate matching is performed on rate matching resources indicated by the rate matching pattern list on the channel, and it can be understood that the rate matching resources indicated by the rate matching pattern list are not available for channel transmission. If a rate matching pattern list does not apply for a channel, it indicates that rate matching may not be performed on the rate matching resources indicated by the rate matching pattern list on the channel, and it can be understood that the rate matching resources indicated by the rate matching pattern list are available for channel transmission.

If the rate matching pattern group 1 applies for a channel, then a dynamic signaling may be used to indicate whether rate matching is performed on rate matching resources indicated by the rate matching pattern group 1 on the channel. If the rate matching pattern group 1 does not apply for a channel, rate matching would not be performed on the rate matching resources indicated by the rate matching pattern group 1 on the channel.

If the rate matching pattern group 2 applies for a channel, then a dynamic signaling may be used to indicate whether rate matching is performed on rate matching resources indicated by the rate matching pattern group 2 on the channel. If the rate matching pattern group 2 does not apply for a channel, rate matching would not be performed on the rate matching resources indicated by the rate matching pattern group 2 on the channel.

In a possible embodiment, up to 4 rate matching patterns are configured per bandwidth part (BWP), and up to 4 rate matching patterns are configured per serving cell. In this possible embodiment, by restricting the number of rate matching patterns per BWP and per service cell, the complexity of a terminal can be reduced.

In a possible embodiment, the unicast channel is a unicast physical downlink shared channel (PDSCH).

Optionally, the unicast PDSCH is a PDSCH scheduled or activated by a first physical downlink control channel (PDCCH), and the first PDCCH is scrambled by a cell-radio network temporary identifier (C-RNTI), a modulation and coding scheme-cell-radio network temporary identifier (MCS-C-RNTI), or a configured scheduling-radio network temporary identifier (CS-RNTI).

In a possible embodiment, the broadcast channel is a broadcast PDSCH.

Optionally, the broadcast PDSCH is a PDSCH scheduled by a second PDCCH, and the second PDCCH is scrambled by a broadcast multicast service control channel-radio network temporary identifier (MCCH-RNTI) or a group-radio network temporary identifier (G-RNTI) for broadcast.

In a possible embodiment, the multicast channel is a multicast PDSCH.

Optionally, the multicast PDSCH is a PDSCH scheduled by a third PDCCH, and the third PDCCH is scrambled by a group configured scheduling-radio network temporary identifier (G-CS-RNTI) or a G-RNTI for multicast.

According to the method illustrated in FIG. 2, the system performance can be improved, for example, the system robustness can be improved or the system throughput can be improved. For example, when the first rate matching pattern list further applies for a broadcast channel or a multicast channel, the second rate matching pattern list further applies for a unicast channel or a multicast channel, or the third rate matching pattern list, and/or the rate matching pattern group 1, and/or the rate matching pattern group 2 further applies for a broadcast channel or a unicast channel, the robustness of the system can be improved. When the first rate matching pattern list does not apply for a broadcast channel or a multicast channel, the second rate matching pattern list does not apply for a unicast channel or a multicast channel, or the third rate matching pattern list, the rate matching pattern group 1, and/or the rate matching pattern group 2 does not apply for a broadcast channel or a unicast channel, the system throughput can be improved.

Reference is made to FIG. 3, which is a schematic structural diagram of a rate matching apparatus provided in embodiments of the present disclosure. The rate matching apparatus illustrated in FIG. 3 may be configured to perform a part or all of functions of the terminal device in the method embodiment corresponding to FIG. 2. The apparatus may be a terminal device, an apparatus in the terminal device, or an apparatus that can work together with the terminal device. The rate matching apparatus may also be a chip system. The rate matching apparatus illustrated in FIG. 3 may include a communication unit 301 and a processing unit 302. The processing unit 302 is configured to process data, and the communication unit 301 integrates a receiving unit and a sending unit. The communication unit 301 may also be referred to as a transceiving unit, or the communication unit 301 may also be separated into a receiving unit and a sending unit.

The communication unit 301 is configured to receive first configuration information and/or second configuration information and/or third configuration information.

The first configuration information is used to configure a first rate matching pattern list (*rateMatchPatternToAddModList*) for a unicast channel; and the first rate matching pattern list further applies for a broadcast channel or does not apply for a broadcast channel, and/or the first rate matching pattern list further applies for a multicast channel or does not apply for a multicast channel;

The second configuration information is used to configure a second rate matching pattern list for a broadcast channel; and the second rate matching pattern list further applies for a unicast channel or does not apply for a unicast channel, and/or the second rate matching pattern list further applies for a multicast channel or does not apply for a multicast channel; and

The third configuration information is used to configure a third rate matching pattern list for a multicast channel, and/or rate matching pattern group 1 (*rateMatchPatternGroup1*) for a multicast channel, and/or rate matching pattern group 2 *(rateMatchPatternGroup2)* for a multicast channel; and the third rate matching pattern list, and/or the rate matching pattern group 1, and/or the rate matching pattern group 2 further applies for a broadcast channel or does not apply for a broadcast channel, and/or the third rate matching pattern list, and/or the rate matching pattern group 1, and/or the rate matching pattern group 2 further applies for a unicast channel or does not apply for a unicast channel.

In a possible embodiment, up to 4 rate matching patterns are configured per bandwidth part (BWP), and up to 4 rate matching patterns are configured per serving cell.

In a possible embodiment, the first configuration information is a physical downlink shared channel configuration *(PDSCH-Config)* or a serving cell configuration *(ServingCellConfig)* or a serving cell common configuration *(ServingCellConfigCommon);* and/or the second configuration information is a physical downlink shared channel-configuration-broadcast multicast service control channel (*PDSCH-Config-MCCH*) or a physical downlink shared channel-configuration-broadcast multicast service traffic channel *(PDSCH-Config-MTCH*); and/or the third configuration information is physical downlink shared channel configuration-multicast *(PDSCH-Config-Multicast).*

In a possible embodiment, the unicast channel is a unicast physical downlink shared channel (PDSCH), and/or the broadcast channel is a broadcast PDSCH, and/or the multicast channel is a multicast PDSCH.

In a possible embodiment, the unicast PDSCH is a PDSCH scheduled or activated by a first physical downlink control channel (PDCCH), and the first PDCCH is scrambled by a cell-radio network temporary identifier (C-RNTI), a modulation and coding scheme-cell-radio network temporary identifier (MCS-C-RNTI), or a configured scheduling-radio network temporary identifier (CS-RNTI); and/or the broadcast PDSCH is a PDSCH scheduled by a second PDCCH, and the second PDCCH is scrambled by a broadcast multicast service control channel-radio network temporary identifier (MCCH-RNTI) or a group-radio network temporary identifier (G-RNTI) for broadcast; and/or the multicast PDSCH is a PDSCH scheduled by a third PDCCH, and the third PDCCH is scrambled by a group configured scheduling-radio network temporary identifier (G-CS-RNTI) or a G-RNTI for multicast.

Reference is made to FIG. 3, which is a schematic structural diagram of a rate matching apparatus provided in embodiments of the present disclosure. The rate matching apparatus illustrated in FIG. 3 may be configured to perform a part or all of functions of the access network device in the method embodiment corresponding to FIG. 2. The apparatus may be an access network device, an apparatus in the access network device, or an apparatus that can work together with the access network device. The rate matching apparatus may also be a chip system. The rate matching apparatus illustrated in FIG. 3 may include a communication unit 301 and a processing unit 302. The processing unit 302 is configured to process data, and the communication unit 301 integrates a receiving unit and a sending unit. The communication unit 301 may also be referred to as a transceiving unit, or the communication unit 301 may also be separated into a receiving unit and a sending unit.

The communication unit 301 is configured to send first configuration information and/or second configuration information and/or third configuration information;

The first configuration information is used to configure a first rate matching pattern list (*rateMatchPatternToAddModList*) for a unicast channel; and the first rate matching pattern list further applies for a broadcast channel or does not apply for a broadcast channel, and/or the first rate matching pattern list further applies for a multicast channel or does not apply for a multicast channel;

The second configuration information is used to configure a second rate matching pattern list for a broadcast channel; and the second rate matching pattern list further applies for a unicast channel or does not apply for a unicast channel, and/or the second rate matching pattern list further applies for a multicast channel or does not apply for a multicast channel; and

The third configuration information is used to configure a third rate matching pattern list for a multicast channel, and/or rate matching pattern group 1 (*rateMatchPatternGroup1*) for a multicast channel, and/or rate matching pattern group 2 (*rateMatchPatternGroup2*) for a multicast channel; and the third rate matching pattern list, and/or the rate matching pattern group 1, and/or the rate matching pattern group 2 further applies for a broadcast channel or does not apply for a broadcast channel, and/or the third rate matching pattern list, and/or the rate matching pattern group 1, and/or the rate matching pattern group 2 further applies for a unicast channel or does not apply for a unicast channel.

In a possible embodiment, up to 4 rate matching patterns are configured per bandwidth part (BWP), and up to 4 rate matching patterns are configured per serving cell.

In a possible embodiment, the first configuration information is a physical downlink shared channel configuration *(PDSCH-Config)* or a serving cell configuration *(ServingCellConfig)* or a serving cell common configuration *(ServingCellConfigCommon);* and/or the second configuration information is a physical downlink shared channel-configuration-broadcast multicast service control channel (*PDSCH-Config-MCCH*) or a physical downlink shared channel-configuration-broadcast multicast service traffic channel *(PDSCH-Config-MTCH*); and/or the third configuration information is physical downlink shared channel configuration-multicast *(PDSCH-Config-Multicast).*

In a possible embodiment, the unicast channel is a unicast physical downlink shared channel (PDSCH), and/or the broadcast channel is a broadcast PDSCH, and/or the multicast channel is a multicast PDSCH.

In a possible embodiment, the unicast PDSCH is a PDSCH scheduled or activated by a first physical downlink control channel (PDCCH), and the first PDCCH is scrambled by a cell-radio network temporary identifier (C-RNTI), a modulation and coding scheme-cell-radio network temporary identifier (MCS-C-RNTI), or a configured scheduling-radio network temporary identifier (CS-RNTI); and/or the broadcast PDSCH is a PDSCH scheduled by a second PDCCH, and the second PDCCH is scrambled by a broadcast multicast service control channel-radio network temporary identifier (MCCH-RNTI) or a group-radio network temporary identifier (G-RNTI) for broadcast; and/or the multicast PDSCH is a PDSCH scheduled by a third PDCCH, and the third PDCCH is scrambled by a group configured scheduling-radio network temporary identifier (G-CS-RNTI) or a G-RNTI for multicast.

A chip is further provided in embodiments of the present disclosure, and the chip is configured to perform operations relevant to the terminal device in the method embodiment corresponding to FIG. 2 described above. The chip includes a processor and a communication interface, and the processor is configured to enable the chip to receive first configuration information and/or second configuration information and/or third configuration information.

The first configuration information is used to configure a first rate matching pattern list (*rateMatchPatternToAddModList*) for a unicast channel; and the first rate matching pattern list further applies for a broadcast channel or does not apply for a broadcast channel, and/or the first rate matching pattern list further applies for a multicast channel or does not apply for a multicast channel;
The second configuration information is used to configure a second rate matching pattern list for a broadcast channel; and the second rate matching pattern list further applies for a unicast channel or does not apply for a unicast channel, and/or the second rate matching pattern list further applies for a multicast channel or does not apply for a multicast channel; and
The third configuration information is used to configure a third rate matching pattern list for a multicast channel, and/or rate matching pattern group 1 *(rateMatchPatternGroupl)* for a multicast channel, and/or rate matching pattern group 2 *(rateMatchPatternGroup2)* for a multicast channel; and the third rate matching pattern list, and/or the rate matching pattern group 1, and/or the rate matching pattern group 2 further applies for a broadcast channel or does not apply for a broadcast channel, and/or the third rate matching pattern list, and/or the rate matching pattern group 1, and/or the rate matching pattern group 2 further applies for a unicast channel or does not apply for a unicast channel.

In a possible embodiment, up to 4 rate matching patterns are configured per bandwidth part (BWP), and up to 4 rate matching patterns are configured per serving cell.

In a possible embodiment, the first configuration information is a physical downlink shared channel configuration *(PDSCH-Config)* or a serving cell configuration *(ServingCellConfig)* or a serving cell common configuration *(ServingCellConfigCommon);* and/or the second configuration information is a physical downlink shared channel-configuration-broadcast multicast service control channel (*PDSCH-Config-MCCH*) or a physical downlink shared channel-configuration-broadcast multicast service traffic channel *(PDSCH-Config-MTCH*); and/or the third configuration information is physical downlink shared channel configuration-multicast *(PDSCH-Config-Multicast).*

In a possible embodiment, the unicast channel is a unicast physical downlink shared channel (PDSCH), and/or the broadcast channel is a broadcast PDSCH, and/or the multicast channel is a multicast PDSCH.

In a possible embodiment, the unicast PDSCH is a PDSCH scheduled or activated by a first physical downlink control channel (PDCCH), and the first PDCCH is scrambled by a cell-radio network temporary identifier (C-RNTI), a modulation and coding scheme-cell-radio network temporary identifier (MCS-C-RNTI), or a configured scheduling-radio network temporary identifier (CS-RNTI); and/or the broadcast PDSCH is a PDSCH scheduled by a second PDCCH, and the second PDCCH is scrambled by a broadcast multicast service control channel-radio network temporary identifier (MCCH-RNTI) or a group-radio network temporary identifier (G-RNTI) for broadcast; and/or the multicast PDSCH is a PDSCH scheduled by a third PDCCH, and the third PDCCH is scrambled by a group configured scheduling-radio network temporary identifier (G-CS-RNTI) or a G-RNTI for multicast.

A chip is further provided in embodiments of the present disclosure, and the chip is configured to perform operations relevant to the access network device in the method embodiment corresponding to FIG. 2 described above. The chip includes a processor and a communication interface, and the processor is configured to enable the chip to send first configuration information and/or second configuration information and/or third configuration information.

The first configuration information is used to configure a first rate matching pattern list *(rateMatchPatternToAddModList)* for a unicast channel; and the first rate matching pattern list further applies for a broadcast channel or does not apply for a broadcast channel, and/or the first rate matching pattern list further applies for a multicast channel or does not apply for a multicast channel;
The second configuration information is used to configure a second rate matching pattern list for a broadcast channel; and the second rate matching pattern list further applies for a unicast channel or does not apply for a unicast channel, and/or the second rate matching pattern list further applies for a multicast channel or does not apply for a multicast channel; and
The third configuration information is used to configure a third rate matching pattern list for a multicast channel, and/or rate matching pattern group 1 (*rateMatchPatternGroup1*) for a multicast channel, and/or rate matching pattern group 2 (*rateMatchPatternGroup2*) for a multicast channel; and the third rate matching pattern list, and/or the rate matching pattern group 1, and/or the rate matching pattern group 2 further applies for a broadcast channel or does not apply for a broadcast channel, and/or the third rate matching pattern list, and/or the rate matching pattern group 1, and/or the rate matching pattern group 2 further applies for a unicast channel or does not apply for a unicast channel.

In a possible embodiment, up to 4 rate matching patterns are configured per bandwidth part (BWP), and up to 4 rate matching patterns are configured per serving cell.

In a possible embodiment, the first configuration information is a physical downlink shared channel configuration *(PDSCH-Config)* or a serving cell configuration *(ServingCellConfig)* or a serving cell common configuration *(ServingCellConfigCommon);* and/or the second configuration information is a physical downlink shared channel-configuration-broadcast multicast service control channel (*PDSCH-Config-MCCH*) or a physical downlink shared channel-configuration-broadcast multicast service traffic channel *(PDSCH-Config-MTCH*); and/or the third configuration information is physical downlink shared channel configuration-multicast *(PDSCH-Config-Multicast).*

In a possible embodiment, the unicast channel is a unicast physical downlink shared channel (PDSCH), and/or the broadcast channel is a broadcast PDSCH, and/or the multicast channel is a multicast PDSCH.

In a possible embodiment, the unicast PDSCH is a PDSCH scheduled or activated by a first physical downlink control channel (PDCCH), and the first PDCCH is scrambled by a cell-radio network temporary identifier (C-RNTI), a modulation and coding scheme-cell-radio network temporary identifier (MCS-C-RNTI), or a configured scheduling-radio network temporary identifier (CS-RNTI); and/or the broadcast PDSCH is a PDSCH scheduled by a second PDCCH, and the second PDCCH is scrambled by a broadcast multicast service control channel-radio network temporary identifier (MCCH-RNTI) or a group-radio network temporary identifier (G-RNTI) for broadcast; and/or the multicast PDSCH is a PDSCH scheduled by a third PDCCH, and the third PDCCH is scrambled by a group configured scheduling-radio network temporary identifier (G-CS-RNTI) or a G-RNTI for multicast.

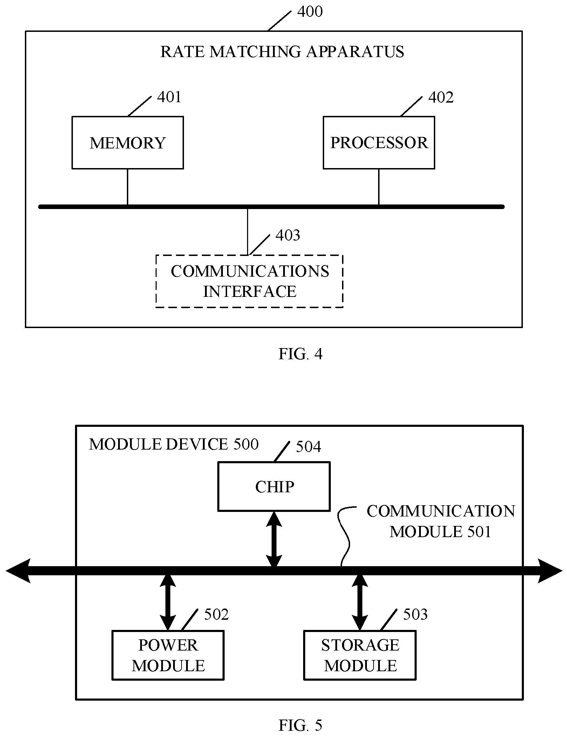

Reference is made to FIG. 4, which a schematic structural diagram of a rate matching apparatus provided in embodiments of the present disclosure. The rate matching apparatus may be a terminal device or an access network device. The rate matching apparatus 400 may include a memory 401 and a processor 402. Optionally, the rate matching apparatus 400 may further include a communications interface 403. The memory 401, the processor 402, and the communications interface 403 are connected via one or more communications buses. The communication interface 403 is controlled by the processor 402 to send and receive information.

The memory 401 may include a read-only memory (ROM) and a random access memory (RAM) and provide instructions and data to the processor 402. A part of the memory 401 may also include a non-volatile RAM.

The communication interface 403 is configured to receive or send data.

The processor 402 may be a central processing unit (CPU). The processor 402 may also be a general-purpose processor, a digital signal processor (DSP), an application-specific integrated circuit (ASIC), a field programmable gate array (FPGA), or other programmable logic devices, discrete gates or transistor logic devices, discrete hardware components, etc. The general-purpose processor may be a microprocessor. Optionally, the processor 402 may be any conventional processor or the like.

The memory 401 is configured to store program instructions. The processor 402 is configured to invoke the program instructions stored in memory 401. The processor 402 is configured to invoke the program instructions stored in the memory 401 to enable the rate matching apparatus 400 to perform the method executed by the terminal device or the access network device in the method embodiment.

Reference may be made to FIG. 5, which is a schematic structural diagram of a module device provided in embodiments of the disclosure. A module device 500 may perform the operations executed by the terminal device or the access network device in the method embodiments. The module device 500 may include a communication module 501, a power module 502, a storage module 503, and a chip 504.

The power module 502 is configured to power the module device. The storage module 503 is configured to store data and instructions. The communication module 501 is configured to perform internal communication within the module device or to perform communication between the module device and an external device. The chip 504 is configured to perform the methods executed by the terminal device or the network device in the method embodiments.

It may be noted that, for contents not mentioned and specific implementations of each operation in embodiments as illustrated in FIG. 4 and FIG. 5, reference may be made to embodiments as illustrated in FIG. 5 and the foregoing contents, which will not be repeated herein.

Embodiments of the disclosure further provide a computer-readable storage medium. The computer-readable storage medium is configured to store computer-readable instructions which, when executed on a processor, enable the processor to implement the operations of the method of the method embodiments.

Embodiments of the disclosure further provide a computer program product which, when executed on a processor, causes the processor to implement the operations of the method of the method embodiments.

Each module/unit in the apparatuses or products described in the foregoing embodiments may be a software module/unit, a hardware module/unit, or may be partially a software module/unit and partially a hardware module/unit. For example, per apparatus and product applicable to or integrated into a chip, each module/unit included may be implemented by means of hardware such as circuits or the like, or at least part of modules/units may be implemented by means of a software program that run on a processor integrated inside the chip, and the rest of (if any) modules/units may be implemented by means of hardware such as circuits or the like. For each apparatus and product applicable to or integrated into a chip module, each module/unit included may be implemented by means of hardware such as circuits or the like, and different modules/units may be located in a same component (such as a chip, a circuit module, etc.) or different components of the chip module. Alternatively, at least part of modules/units may be implemented by means of the software program that is run on the processor integrated inside the chip module, and the rest of (if any) modules/units may be implemented by means of hardware such as circuits or the like. For each apparatus and product applicable to or integrated into a terminal device, each module/unit included may be implemented by means of hardware such as circuits or the like, and different modules/units may be located in a same component (e.g., a chip, a circuit module, etc.) or different components in the terminal device, or at least part of modules/units may be implemented by means of the software program that run on the processor integrated inside the terminal device, and the rest of (if any) modules/units may be implemented by means of hardware such as circuits or the like.

It may be noted that, for the sake of simplicity, the various method embodiments above are described as a series of action combinations. However, it will be appreciated by those skilled in the art that the disclosure is not limited by the sequence of actions described. According to the disclosure, some operations may be performed in other orders or simultaneously. In addition, it will be appreciated by those skilled in the art that the embodiments described in the specification are preferable embodiments, and the actions and modules involved are not necessarily essential to the disclosure.

For descriptions of embodiments of the disclosure, references may be made to each other, and the description of each embodiment has its own emphasis. For a part not described in detail in an embodiment, reference may be made to related illustrations in other embodiments. For the sake of convenience and brevity, for example, for functions and performed operations of the apparatuses and devices provided in embodiments of the disclosure, reference may be made to related descriptions in the method embodiments of the disclosure. Mutual reference, combination, or citing may also be made between the method embodiments and between the apparatus embodiments.

Finally, it may be noted that, the foregoing embodiments are merely intended for describing the technical solutions of the disclosure, but are not intended to limit the disclosure. Although the disclosure is described in detail with reference to the foregoing embodiments, those of ordinary skill in the art may understand that modifications can still be made to the technical solutions described in the foregoing embodiments, or equivalent replacements can be made to some or all technical features. However, these modifications or replacements do not make the essence of the corresponding technical solutions depart from the scope of the technical solutions of the embodiments of the disclosure.

## Claims

1. A rate matching method, comprising:
receiving first configuration information and/or second configuration information and/or third configuration information;
wherein the first configuration information is used to configure a first rate matching pattern list *(rateMatchPatternToAddModList)* for a unicast channel; and the first rate matching pattern list further applies for a broadcast channel or does not apply for a broadcast channel, and/or the first rate matching pattern list further applies for a multicast channel or does not apply for a multicast channel;
wherein the second configuration information is used to configure a second rate matching pattern list for a broadcast channel; and the second rate matching pattern list further applies for a unicast channel or does not apply for a unicast channel, and/or the second rate matching pattern list further applies for a multicast channel or does not apply for a multicast channel; and
wherein the third configuration information is used to configure a third rate matching pattern list for a multicast channel, and/or rate matching pattern group 1 *(rateMatchPatternGroupl)* for a multicast channel, and/or rate matching pattern group 2 *(rateMatchPatternGroup2)* for a multicast channel; and the third rate matching pattern list, and/or the rate matching pattern group 1, and/or the rate matching pattern group 2 further applies for a broadcast channel or does not apply for a broadcast channel, and/or the third rate matching pattern list, and/or the rate matching pattern group 1, and/or the rate matching pattern group 2 further applies for a unicast channel or does not apply for a unicast channel.

2. The method of claim 1, wherein up to 4 rate matching patterns are configured per bandwidth part (BWP), and up to 4 rate matching patterns are configured per serving cell.

3. The method of claim 1, wherein,
the first configuration information is a physical downlink shared channel configuration *(PDSCH-Config)* or a serving cell configuration *(ServingCellConfig)* or a serving cell common configuration *(ServingCellConfigCommon);* and/or
the second configuration information is a physical downlink shared channel-configuration-broadcast multicast service control channel (*PDSCH-Config-MCCH*) or a physical downlink shared channel-configuration-broadcast multicast service traffic channel *(PDSCH-Config-MTCH*); and/or
the third configuration information is physical downlink shared channel configuration-multicast *(PDSCH-Config-Multicast).*

4. The method of any one of claims 1 to 3, wherein the unicast channel is a unicast physical downlink shared channel (PDSCH), and/or the broadcast channel is a broadcast PDSCH, and/or the multicast channel is a multicast PDSCH.

5. The method of claim 4, wherein,
the unicast PDSCH is a PDSCH scheduled or activated by a first physical downlink control channel (PDCCH), and the first PDCCH is scrambled by a cell-radio network temporary identifier (C-RNTI), a modulation and coding scheme-cell-radio network temporary identifier (MCS-C-RNTI), or a configured scheduling-radio network temporary identifier (CS-RNTI); and/or
the broadcast PDSCH is a PDSCH scheduled by a second PDCCH, and the second PDCCH is scrambled by a broadcast multicast service control channel-radio network temporary identifier (MCCH-RNTI) or a group-radio network temporary identifier (G-RNTI) for broadcast; and/or
the multicast PDSCH is a PDSCH scheduled by a third PDCCH, and the third PDCCH is scrambled by a group configured scheduling-radio network temporary identifier (G-CS-RNTI) or a G-RNTI for multicast.

6. A rate matching method, comprising:
sending first configuration information and/or second configuration information and/or third configuration information;
wherein the first configuration information is used to configure a first rate matching pattern list *(rateMatchPatternToAddModList)* for a unicast channel; and the first rate matching pattern list further applies for a broadcast channel or does not apply for a broadcast channel, and/or the first rate matching pattern list further applies for a multicast channel or does not apply for a multicast channel;
wherein the second configuration information is used to configure a second rate matching pattern list for a broadcast channel; and the second rate matching pattern list further applies for a unicast channel or does not apply for a unicast channel, and/or the second rate matching pattern list further applies for a multicast channel or does not apply for a multicast channel; and
wherein the third configuration information is used to configure a third rate matching pattern list for a multicast channel, and/or rate matching pattern group 1 *(rateMatchPatternGroupl)* for a multicast channel, and/or rate matching pattern group 2 *(rateMatchPatternGroup2)* for a multicast channel; and the third rate matching pattern list, and/or the rate matching pattern group 1, and/or the rate matching pattern group 2 further applies for a broadcast channel or does not apply for a broadcast channel, and/or the third rate matching pattern list, and/or the rate matching pattern group 1, and/or the rate matching pattern group 2 further applies for a unicast channel or does not apply for a unicast channel.

7. The method of claim 6, wherein up to 4 rate matching patterns are configured per bandwidth part (BWP), and up to 4 rate matching patterns are configured per serving cell.

8. The method of claim 6, wherein,
the first configuration information is a physical downlink shared channel configuration *(PDSCH-Config)* or a serving cell configuration *(ServingCellConfig)* or a serving cell common configuration *(ServingCellConfigCommon);* and/or
the second configuration information is a physical downlink shared channel-configuration-broadcast multicast service control channel (*PDSCH-Config-MCCH*) or a physical downlink shared channel-configuration-broadcast multicast service traffic channel *(PDSCH-Config-MTCH*); and/or
the third configuration information is physical downlink shared channel configuration-multicast *(PDSCH-Config-Multicast).*

9. The method of any one of claims 6 to 8, wherein the unicast channel is a unicast physical downlink shared channel (PDSCH), and/or the broadcast channel is a broadcast PDSCH, and/or the multicast channel is a multicast PDSCH.

10. The method of claim 9, wherein,
the unicast PDSCH is a PDSCH scheduled or activated by a first physical downlink control channel (PDCCH), and the first PDCCH is scrambled by a cell-radio network temporary identifier (C-RNTI), a modulation and coding scheme-cell-radio network temporary identifier (MCS-C-RNTI), or a configured scheduling-radio network temporary identifier (CS-RNTI); and/or
the broadcast PDSCH is a PDSCH scheduled by a second PDCCH, and the second PDCCH is scrambled by a broadcast multicast service control channel-radio network temporary identifier (MCCH-RNTI) or a group-radio network temporary identifier (G-RNTI) for broadcast; and/or
the multicast PDSCH is a PDSCH scheduled by a third PDCCH, and the third PDCCH is scrambled by a group configured scheduling-radio network temporary identifier (G-CS-RNTI) or a G-RNTI for multicast.

11. A rate matching apparatus, comprising:
a communication unit configured to receive first configuration information and/or second configuration information and/or third configuration information;
wherein the first configuration information is used to configure a first rate matching pattern list *(rateMatchPatternToAddModList)* for a unicast channel; and the first rate matching pattern list further applies for a broadcast channel or does not apply for a broadcast channel, and/or the first rate matching pattern list further applies for a multicast channel or does not apply for a multicast channel;
wherein the second configuration information is used to configure a second rate matching pattern list for a broadcast channel; and the second rate matching pattern list further applies for a unicast channel or does not apply for a unicast channel, and/or the second rate matching pattern list further applies for a multicast channel or does not apply for a multicast channel; and
wherein the third configuration information is used to configure a third rate matching pattern list for a multicast channel, and/or rate matching pattern group 1 *(rateMatchPatternGroupl)* for a multicast channel, and/or rate matching pattern group 2 *(rateMatchPatternGroup2)* for a multicast channel; and the third rate matching pattern list, and/or the rate matching pattern group 1, and/or the rate matching pattern group 2 further applies for a broadcast channel or does not apply for a broadcast channel, and/or the third rate matching pattern list, and/or the rate matching pattern group 1, and/or the rate matching pattern group 2 further applies for a unicast channel or does not apply for a unicast channel.

12. The apparatus of claim 11, wherein up to 4 rate matching patterns are configured per bandwidth part (BWP), and up to 4 rate matching patterns are configured per serving cell.

13. The apparatus of claim 11, wherein,
the first configuration information is a physical downlink shared channel configuration *(PDSCH-Config)* or a serving cell configuration *(ServingCellConfig)* or a serving cell common configuration *(ServingCellConfigCommon);* and/or
the second configuration information is a physical downlink shared channel-configuration-broadcast multicast service control channel (*PDSCH-Config-MCCH*) or a physical downlink shared channel-configuration-broadcast multicast service traffic channel *(PDSCH-Config-MTCH*); and/or
the third configuration information is physical downlink shared channel configuration-multicast *(PDSCH-Config-Multicast).*

14. The apparatus of any one of claims 11 to 13, wherein the unicast channel is a unicast physical downlink shared channel (PDSCH), and/or the broadcast channel is a broadcast PDSCH, and/or the multicast channel is a multicast PDSCH.

15. The apparatus of claim 14, wherein,
the unicast PDSCH is a PDSCH scheduled or activated by a first physical downlink control channel (PDCCH), and the first PDCCH is scrambled by a cell-radio network temporary identifier (C-RNTI), a modulation and coding scheme-cell-radio network temporary identifier (MCS-C-RNTI), or a configured scheduling-radio network temporary identifier (CS-RNTI); and/or
the broadcast PDSCH is a PDSCH scheduled by a second PDCCH, and the second PDCCH is scrambled by a broadcast multicast service control channel-radio network temporary identifier (MCCH-RNTI) or a group-radio network temporary identifier (G-RNTI) for broadcast; and/or
the multicast PDSCH is a PDSCH scheduled by a third PDCCH, and the third PDCCH is scrambled by a group configured scheduling-radio network temporary identifier (G-CS-RNTI) or a G-RNTI for multicast.

16. A rate matching apparatus, comprising:
a communication unit configured to send first configuration information and/or second configuration information and/or third configuration information;
wherein the first configuration information is used to configure a first rate matching pattern list *(rateMatchPatternToAddModList)* for a unicast channel; and the first rate matching pattern list further applies for a broadcast channel or does not apply for a broadcast channel, and/or the first rate matching pattern list further applies for a multicast channel or does not apply for a multicast channel;
wherein the second configuration information is used to configure a second rate matching pattern list for a broadcast channel; and the second rate matching pattern list further applies for a unicast channel or does not apply for a unicast channel, and/or the second rate matching pattern list further applies for a multicast channel or does not apply for a multicast channel; and
wherein the third configuration information is used to configure a third rate matching pattern list for a multicast channel, and/or rate matching pattern group 1 *(rateMatchPatternGroupl)* for a multicast channel, and/or rate matching pattern group 2 *(rateMatchPatternGroup2)* for a multicast channel; and the third rate matching pattern list, and/or the rate matching pattern group 1, and/or the rate matching pattern group 2 further applies for a broadcast channel or does not apply for a broadcast channel, and/or the third rate matching pattern list, and/or the rate matching pattern group 1, and/or the rate matching pattern group 2 further applies for a unicast channel or does not apply for a unicast channel.

17. The apparatus of claim 16, wherein up to 4 rate matching patterns are configured per bandwidth part (BWP), and up to 4 rate matching patterns are configured per serving cell.

18. The apparatus of claim 16, wherein,
the first configuration information is a physical downlink shared channel configuration *(PDSCH-Config)* or a serving cell configuration *(ServingCellConfig)* or a serving cell common configuration *(ServingCellConfigCommon);* and/or
the second configuration information is a physical downlink shared channel-configuration-broadcast multicast service control channel (*PDSCH-Config-MCCH*) or a physical downlink shared channel-configuration-broadcast multicast service traffic channel *(PDSCH-Config-MTCH*); and/or
the third configuration information is physical downlink shared channel configuration-multicast *(PDSCH-Config-Multicast).*

19. The apparatus of any one of claims 16 to 18, wherein the unicast channel is a unicast physical downlink shared channel (PDSCH), and/or the broadcast channel is a broadcast PDSCH, and/or the multicast channel is a multicast PDSCH.

20. The apparatus of claim 19, wherein,
the unicast PDSCH is a PDSCH scheduled or activated by a first physical downlink control channel (PDCCH), and the first PDCCH is scrambled by a cell-radio network temporary identifier (C-RNTI), a modulation and coding scheme-cell-radio network temporary identifier (MCS-C-RNTI), or a configured scheduling-radio network temporary identifier (CS-RNTI); and/or
the broadcast PDSCH is a PDSCH scheduled by a second PDCCH, and the second PDCCH is scrambled by a broadcast multicast service control channel-radio network temporary identifier (MCCH-RNTI) or a group-radio network temporary identifier (G-RNTI) for broadcast; and/or
the multicast PDSCH is a PDSCH scheduled by a third PDCCH, and the third PDCCH is scrambled by a group configured scheduling-radio network temporary identifier (G-CS-RNTI) or a G-RNTI for multicast.

21. A chip, wherein the chip does not support simultaneous transmission of a plurality of beams, the chip comprises a processor and a communication interface, the processor is configured to enable the chip to perform the method of any one of claims 1 to 5, or the processor is configured to enable the chip to perform the method of any one of claims 6 to 10.

22. A module device, wherein the module device does not support simultaneous transmission of a plurality of beams, and the module device comprises a communication module, a power module, a storage module, and a chip, wherein:
the power module is configured to power the module device;
the storage module is configured to store data and instructions;
the communication module is configured to perform communication within the module device, or configured to perform communication between the module device and an external device; and
the chip is configured to perform the method of any one of claims 1 to 5, or the chip is configured to perform the method of any one of claims 6 to 10.

23. A rate matching apparatus, wherein the rate matching apparatus comprises a memory and a processor, the memory is configured to store a computer program, the computer program comprises program instructions, and the processor is configured to invoke the program instructions to enable the rate matching apparatus to perform the method of any one of claims 1 to 5, or enable the rate matching apparatus to perform the method of any one of claims 6 to 10.

24. A computer-readable storage medium, wherein the computer storage medium stores computer-readable instructions which, when executed on a rate matching apparatus, enable the rate matching apparatus to perform the method of any one of claims 1 to 5, or enable the rate matching apparatus to perform the method of any one of claims 6 to 10.

25. A computer program or a computer program product, comprising codes or instructions which, when executed on a computer, enable the computer to perform the method of any one of claims 1 to 5, or enable the computer to perform the method of any one of claims 6 to 10.
